# EUROPEAN PATENT SPECIFICATION

(11) **EP 3 296 703 B1**
(45) Date of publication and mention of the grant of the patent: **03.03.2021**
(21) Application number: 16792730.0
(22) Date of filing: 11.05.2016
(51) Int. Cl.: G01D 5/347

(54) **GRID PLATE FOR OPTICAL ENCODER, AND METHOD FOR MANUFACTURING GRID PLATE FOR OPTICAL ENCODER**
GITTERPLATTE FÜR EINEN OPTISCHEN CODIERER UND VERFAHREN ZUR HERSTELLUNG EINER GITTERPLATTE FÜR EINEN OPTISCHEN CODIERER
PLAQUE DE GRILLE POUR UN CODEUR OPTIQUE, ET PROCÉDÉ DE FABRICATION D'UNE PLAQUE DE GRILLE POUR UN CODEUR OPTIQUE

(30) Priority: 13.05.2015 JP 2015097864
(43) Date of publication of application: 21.03.2018
(73) Proprietor: Meltec Corporation, Kashiwa-shi, Chiba 277-0087 (JP)
(72) Inventor: FUJII, Takeo, Nagareyama-shi, Chiba 270-0164 (JP)
(74) Representative: Körfer, Thomas
(86) International application number: PCT/JP2016/064064
(87) International publication number: WO 2016/182005

(56) References cited:
- EP-A1- 0 497 742
- WO-A1-2009/031608
- JP-A- S61 212 727
- JP-A- 2006 250 784
- JP-A- 2006 337 321
- JP-A- 2009 511 276
- JP-A- 2013 061 156
- JP-A- 2013 221 818
- US-A1- 2011 222 073
- US-A1- 2015 090 868

## Description

### [TECHNICAL FIELD]

The present invention relates to an optical encoder grid plate used for an optical encoder which detects a displacement amount or a displacement direction of an object, and relates to a producing method of the optical encoder grid plate.

### [BACKGROUND TECHNIQUE]

Patent document 1 proposes an optical encoder grid plate. This optical encoder grid plate is composed of a metal plate of a single layer structure, and has a mirror finished surface and a plurality of recesses having bottom surfaces having optical reflectance lower than that of the mirror finished surface. These mirror finished surface and the recesses are provided at least on one surface of the metal plate having a single layer structure (e.g., claim 1).

It is described in patent document 1 that a stainless steel plate is used as the metal plate (e.g., paragraph 0011), and layers are formed by black chromium plating in the recesses (e.g., paragraph 0024).

Patent document 2 proposes an optical encoder grid plate having a base material with a conductive light-reflection surface, and having light absorption grids formed a surface of the base material using plating and arranged at a predetermined pitch on the base material (e.g., claim 1).

It is described in patent document 2 that stainless steel is used as the base material, and the light absorption grid is made by black plating (e.g., paragraph 0017).

### [PRIOR ART DOCUMENTS]

### [PATENT DOCUMENTS]

[Patent Document 1] Japanese Patent Application Laid-open No.2013-117512
[Patent Document 2] Japanese Patent Application Laid-open No.2013-108873

### [SUMMARY OF THE INVENTION]

### [PROBLEM TO BE SOLVED BY THE INVENTION]

In patent document 1, the recesses are formed by etching (paragraph 0017 for example) . When the recesses are formed by etching in this manner, a width of each of the recesses is greater than 50 µm in general, and it is difficult to set a depth of the recess less than 10 µm.

When the recess is formed by etching, since a side edge (machined taper) is formed on a wall surface of the recess (boundary wall surface with respect to mirrored surface), a vertical surface cannot be formed.

Therefore, according to the method in which the recesses are formed by etching as in patent document 1, a difference in level between the mirror surface and the bottom surface of the recess becomes 10 µm or greater. Hence, when the reflection surface is irradiated with irradiation light at an angle of 30 to 75°, since diffused reflection is created due to influence of the wall surface of 10 µm or greater, and due to influence of the side edge (machined taper) of the bottom surface of the recess, an S/N ratio is lowered.

In patent document 2, it is described that the film of the black plating is formed thin as thin as 10 µm or less, but general thin film thickness is merely described as an electric plating method.

The optical encoder uses visible light or near-infrared light as irradiation light, the reflection surface is irradiated with irradiation light at an angle of 30 to 75°, irradiation light reflected by a reflection surface is received and according to this, the displacement amount or the displacement direction of an object is detected. In the optical encoder grid plate used for the optical encoder, it is necessary to make a difference in level between a high reflection surface and a low reflection surface small, and there is a limitation in the method in which the recess is formed by etching as in patent document 1.

Further, to form the black plated layer which is strong against peeling and which has excellent plating property, and to realize a high SN ratio, it is necessary to take, into consideration, influence of roughness of a surface a base material.

EP 0 497 742 A1 teaches a graduated element in the form of linear measuring rules with substrates constituted by rigid strips but its application extends to any graduated element carrying graphic marking such as micrometric graduations arranged, inter alia, in a circle or along an arc of a circle, on a substrate in the form of a disc, a circular segment or the like.

US 2015/0090868 A1 refers to a resin encoder scale, the cost of which can be reduced by making processing easy by producing the encoder scale as a resin molded piece including a scale pattern. The document teaches that the roughness of a surface of the high reflection part is preferably 0.05 µm or smaller and the roughness of a surface of the low reflection part is preferably 0.1 µm or larger. Hence, this document teaches preferable roughness of the reflector of the high reflection pattern to be smaller than 0.05 µm. We note that the roughness in this document concerns the reflecting surface and not the base material. In this document, encoders are produced as a molded article made by the resin, and both the low reflector and the high reflector are molded by the resin. That is, this document merely discloses a parameter of the suitable roughness of the surface to get high reflectance.

It is an object of the present invention to provide an optical encoder grid plate which is strong against peeling, which has excellent plating property, and which can realize a high SN ratio, and to provide a producing method of the optical encoder grid plate.

### [MEANS FOR SOLVING THE PROBLEM]

A first aspect of the present invention provides an optical encoder grid plate in which visible light or near-infrared light is used as irradiation light, the optical encoder grid plate is used as an optical encoder which detects a displacement amount or a displacement direction by receiving reflection light reflected by a reflection surface, the optical encoder grid plate includes a base material whose one of surfaces is the reflection surface, and grids arranged at a predetermined grid width on the surface, metal is used as the base material, and the grids are formed by a black plated layer, wherein average roughness Ra of the surface of the metal is in a range from 0.008 µm to 0.05 µm, and a thickness of the black plated layer is thinner than 3µm.

According to a second aspect, in the optical encoder grid plate described in the first aspect, the thickness of the black plated layer is thicker than 0.3 µm.

According to a third aspect, in the optical encoder grid plate described in the second aspect, the thickness of the black plated layer is in a range from 1.0 µm to 2.5 µm.

According to a fourth aspect, in the optical encoder grid plate described in any one of the first to third aspects, resists are formed at a predetermined arrangement on the surface of the metal, and the reflection surface is exposed by removing the resists.

According to a fifth aspect, in the optical encoder grid plate described in the fourth aspect, the grid width is in a range from 10 µm to 100 µm.

According to a sixth aspect, in the optical encoder grid plate described in any one of the first to fifth aspects, stainless steel is used as the metal.

A seventh aspect of the invention provides a producing method of an optical encoder grid plate in which visible light or near-infrared light is used as irradiation light, the optical encoder grid plate is used as an optical encoder which detects a displacement amount or a displacement direction by irradiating a reflection surface with the irradiation light at an angle of 30° to 75°, and by receiving reflection light reflected by the reflection surface, the optical encoder grid plate includes a base material whose one of surfaces is the reflection surface, and grids arranged at a predetermined grid width on the surface, metal is used as the base material, and the grids are formed by a black plated layer, wherein resists are formed with the grid width in a range from 10 µm to 100 µm on the surface of the metal in which average roughness Ra is in a range from 0.008 µm to 0.05 µm, the black plated layer of a thickness in a range set thicker than 0.3 µm but thinner than 3 µm is formed between the resists, and the reflection surface is exposed by removing the resist.

### [EFFECT OF THE INVENTION]

The optical encoder grid plate of the present invention is strong against peeling, has excellent plating property, and can realize a high SN ratio.

### [BRIEF DESCRIPTION OF THE DRAWINGS]

Fig. 1 shows a basic configuration of an optical encoder grid plate according to example of the present invention;
Fig. 2(a) is a plan view of an optical encoder grid plate used in a rotary encoder, and Fig. 2(b) is a plan view of an optical encoder grid plate used in a liner encoder;
Figs. 3 (a) to 3(d) are step diagrams showing a producing method of the optical encoder grid plate of the example;
Fig. 4 shows film thickness testing results of plate layers;
Fig. 5 is a characteristic diagram showing a reflection rate which is the film thickness testing result of a plate layer according to example 1;
Fig. 6 is a characteristic diagram showing a reflection rate which is the film thickness testing result of a plate layer according to example 2;
Fig. 7 is a characteristic diagram showing a reflection rate which is the film thickness testing result of a plate layer according to example 3;
Fig. 8 is a characteristic diagram showing a reflection rate which is the film thickness testing result of a plate layer according to example 4;
Fig. 9 is a characteristic diagram showing a reflection rate which is the film thickness testing result of a plate layer according to example 5;
Fig. 10 is a characteristic diagram showing a reflection rate which is the film thickness testing result of a plate layer according to example 6;
Fig. 11 is a characteristic diagram showing a reflection rate which is the film thickness testing result of a plate layer according to comparative example 1;
Fig. 12 is a characteristic diagram showing a reflection rate which is the film thickness testing result of a plate layer according to comparative example 2;
Fig. 13 is a characteristic diagram showing a reflection rate which is the film thickness testing result of a plate layer according to comparative example 3;
Fig. 14 is a characteristic diagram showing a reflection rate which is the film thickness testing result of a plate layer according to example 7;
Fig. 15 is a photograph showing a crack which is a film thickness testing result of a plate layer according to example 1;
Fig. 16 is a photograph showing a crack which is a film thickness testing result of a plate layer according to example 2;
Fig. 17 is a photograph showing a crack which is a film thickness testing result of a plate layer according to example 3;
Fig. 18 is a photograph showing a crack which is a film thickness testing result of a plate layer according to example 4;
Fig. 19 is a photograph showing a crack which is a film thickness testing result of a plate layer according to example 5;
Fig. 20 is a photograph showing a crack which is a film thickness testing result of a plate layer according to example 6;
Fig. 21 is a photograph showing a crack which is a film thickness testing result of a plate layer according to comparative example 1;
Fig. 22 is a photograph showing a crack which is a film thickness testing result of a plate layer according to comparative example 2;
Fig. 23 is a photograph showing a crack which is a film thickness testing result of a plate layer according to comparative example 3;
Fig. 24 is a photograph showing a crack which is a film thickness testing result of a plate layer according to example 7;
Fig. 25 is a photograph showing a peeling result which is a film thickness testing result of a plate layer according to example 1;
Fig. 26 is a photograph showing a peeling result which is a film thickness testing result of a plate layer according to example 2;
Fig. 27 is a photograph showing a peeling result which is a film thickness testing result of a plate layer according to example 3;
Fig. 28 is a photograph showing a peeling result which is a film thickness testing result of a plate layer according to example 4;
Fig. 29 is a photograph showing a peeling result which is a film thickness testing result of a plate layer according to example 5;
Fig. 30 is a photograph showing a peeling result which is a film thickness testing result of a plate layer according to example 6;
Fig. 31 is a photograph showing a peeling result which is a film thickness testing result of a plate layer according to comparative example 1;
Fig. 32 is a photograph showing a peeling result which is a film thickness testing result of a plate layer according to comparative example 2;
Fig. 33 is a photograph showing a peeling result which is a film thickness testing result of a plate layer according to comparative example 3;
Fig. 34 is a photograph showing a peeling result which is a film thickness testing result of a plate layer according to example 7
Fig. 35 is a photograph taken by 2,500 times showing a state of a plated surface which is a film thickness testing result of a plate layer according to example 1;
Fig. 36 is a photograph taken by 2,500 times showing a state of a plated surface which is a film thickness testing result of a plate layer according to example 2;
Fig. 37 is a photograph taken by 2,500 times showing a state of a plated surface which is a film thickness testing result of a plate layer according to example 3;
Fig. 38 is a photograph taken by 2,500 times showing a state of a plated surface which is a film thickness testing result of a plate layer according to example 4;
Fig. 39 is a photograph taken by 2,500 times showing a state of a plated surface which is a film thickness testing result of a plate layer according to example 5;
Fig. 40 is a photograph taken by 2,500 times showing a state of a plated surface which is a film thickness testing result of a plate layer according to example 6;
Fig. 41 is a photograph taken by 2,500 times showing a state of a plated surface which is a film thickness testing result of a plate layer according to comparative example 1;
Fig. 42 is a photograph taken by 2,500 times showing a state of a plated surface which is a film thickness testing result of a plate layer according to comparative example 2;
Fig. 43 is a photograph taken by 2,500 times showing a state of a plated surface which is a film thickness testing result of a plate layer according to comparative example 3;
Fig. 44 is a photograph taken by 2,500 times showing a state of a plated surface which is a film thickness testing result of a plate layer according to example 7;
Fig. 45 is a photograph taken by 2,500 times showing a state of a plated surface which is a film thickness testing result of a plate layer according to comparative example 4; and
Figs. 46 are diagrams showing surface roughness and a reflection rate of a base material.

### [MODE FOR CARRYING OUT THE INVENTION]

In an optical encoder grid plate according to a first embodiment of the present invention, average roughness Ra of the surface of the metal is in a range from 0.008 µm to 0.05 µm, and a thickness of the black plated layer is thinner than 3µm. According to this embodiment, by forming the black plated layer which is thinner than 3 µm on the metal having the average roughness Ra in the range from 0.008 µm to 0.05 µm, the grid plate is strong against peeling, the reflection rate at a reflection surface becomes 60% or more, a reflection rate at a black plated layer becomes 5% or less, and a high SN ratio can be obtained.

According to a second embodiment of the invention, in the optical encoder grid plate of the first embodiment, the thickness of the black plated layer is thicker than 0.3 µm. According to the second embodiment, by forming the black plated layer which is thicker than 0.3 µm on a metal having the average roughness Ra in a range from 0.008 µm to 0.05 µm, the plating property is excellent and a reflection rate at the black plated layer becomes 3% or less.

According to a third embodiment of the invention, in the optical encoder grid plate of the second embodiment, a thickness of the black plated layer is set within a range from 1.0 µm to 2.5 µm. According to the third embodiment, by forming the black plated layer having the thickness within the range from 1.0 µm to 2.5 µm on a metal having the average roughness Ra in a range from 0.008 µm to 0.05 µm, a crack is not generated, a plating state become excellent, and the reflection rate at the black plated layer becomes 3% or less.

According to a fourth embodiment of the invention, in the optical encoder grid plate of any one of the first to third embodiment, resists are formed at a predetermined arrangement on the surface of the metal, and the reflection surface is exposed by removing the resists. According to the fourth embodiment, since roughness processing and etching are not required in a foundation of the black plated layer, precision of the grid can be enhanced.

According to a fifth embodiment of the invention, in the optical encoder grid plate of the fourth embodiment, the grid width is in a range from 10 µm to 100 µm. According to the fifth embodiment, by forming the grid without etching the black plated layer, since the precision of the grid width becomes 2 µm or less, the embodiment can handle the grid width of 10 µm, and an application effect is high in a grid width of 100 µm or less.

According to a sixth embodiment of the invention, in the optical encoder grid plate of any one of the first to fifth embodiment, stainless steel is used as the metal. According to the sixth embodiment, excellent corrosion resistance can be exerted.

In a producing method of the optical encoder grid plate of a seventh embodiment of the invention, resists are formed with the grid width in a range from 10 µm to 100 µm on the surface of the metal in which average roughness Ra is in a range from 0.008 µm to 0.05 µm, the black plated layer of a thickness in a range set thicker than 0.3 µm but and thinner than 3 µm is formed between the resists, and the reflection surface is exposed by removing the resist. According to the seventh embodiment, since the reflection surface and the grid are formed without etching the base material and the grid, a difference in level between the reflection surface and the grid can be made small, and the side edge (machined taper) at the side surface of the grid can be eliminated.

### [Embodiments]

Examples of the present invention will be described below together with the drawings.

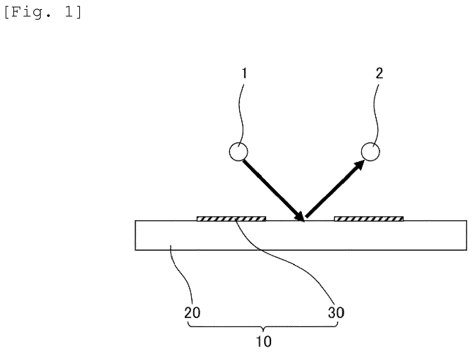

Fig. 1 shows a basic configuration of an optical encoder grid plate according to the example.

The optical encoder grid plate 10 of the example includes a base material 20 whose one of surfaces is a reflection surface, and grids 30 arranged with predetermined grid width on the surface of the base material 20. Metal is used as the base material 20, and the grids 30 are formed by a black plated layer. Stainless steel is suitable as the base material 20, and Ni alloy can also be used. SUS 304, SUS 430, SUS 316 or SUS 301 is especially suitable as the stainless steel. When SUS 304 is used as the base material 20, general-purpose properties are high. When SUS 430 is used as the base material 20, the SUS 430 has a linear expansion coefficient close to glass material. If these SUSs are used, a grid plate having small influence caused by temperature variation can be obtained.

According to an optical encoder using the optical encoder grid plate 10 of the embodiment, visible or near-infrared light is used as irradiation light for a light-emission source 1, the reflection surface is irradiated with irradiation light at an angle of 30 to 75°, and reflection light reflected by the reflection surface is received by a light receiving element 2, thereby detecting a displacement amount or a displacement direction of an object.

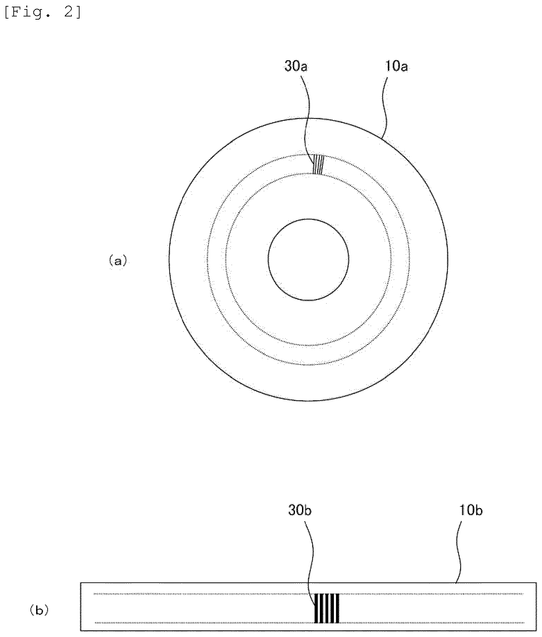

Fig. 2(a) is a plan view of an optical encoder grid plate used in a rotary encoder, and Fig. 2(b) is a plan view of an optical encoder grid plate used in a liner encoder.

As shown in Fig. 2(a), the optical encoder grid plate 10a of the embodiment is formed such that a radius from a center of a reference circle to an outer periphery of a grid 30a is 12 mm to 13 mm, a radial length of the grid 30a is 0.4 mm to 0.8 mm, a width (length in circumferential direction) of the grid 30a is 10 µm to 100 µm, and a width (length in circumferential direction) of a reflection surface is 10 µm to 100 µm. A high SN ratio can be maintained even if the width (length in circumferential direction) of the grid 30a and the width (length in circumferential direction) of the reflection surface between the grids 30a are 50 µm or less.

As shown in Fig. 2(b), the optical encoder grid plate 10b of the example is formed such that a length of a grid 30b is 0.4 mm to 0.8 mm, a width (length in measurement direction) of the grid 30b is 10 µm to 100 µm, and a width (length in measurement direction) of the reflection surface between the grids 30b is 10 µm to 100 µm. A high SN ratio can be maintained even if the width (length in measurement direction) of the grid 30b and the width (length in measurement direction) of the reflection surface between the grids 30b are 50 µm or less.

As shapes of the optical encoder, there are an absolute shape which is a pattern in which a width of the reflection surface is random, and an incremental shape which is a pattern in which the width of the reflection surface is constant. The optical encoder grid plate 10 of the example can be applied to any of the shapes.

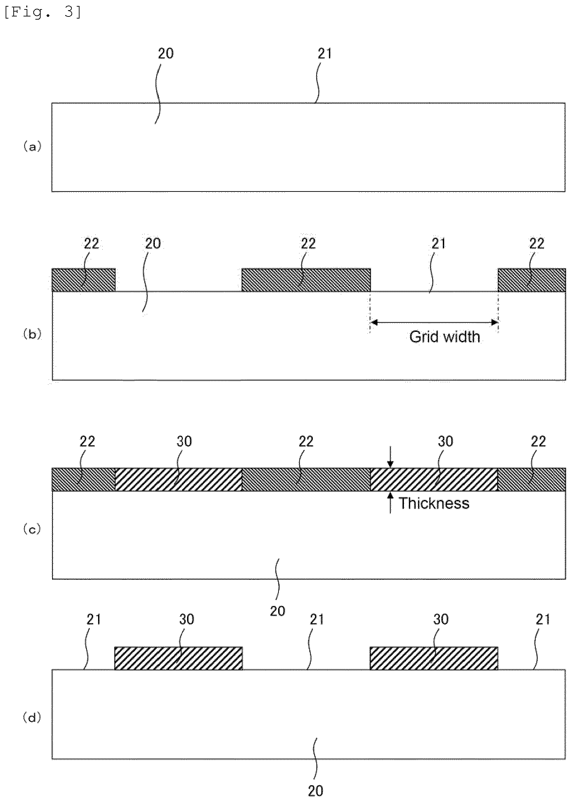

Figs. 3(a) to 3(d) are step diagrams showing a producing method of the optical encoder grid plate of the example.

A base material 20 used in this example is mirror-finished such that an average roughness Ra of a surface 21 which becomes a reflection surface falls in a range from 0.008 µm to 0.05 µm, preferably in a range from 0.008 µm to 0.03 µm.

As shown in Fig. 3(b), resists 22 are formed on the surfaces 21 which become reflection surfaces such that a grid width falls within a range from 10 µm to 100 µm. It is only necessary that a thickness of each of the resists 22 is thicker than that of a plate layer.

As shown in Fig. 3(c), black plated layers each having a thickness in a range set thicker than 0.3 µm but thinner than 3 µm are formed between the resists 22 as grids 30.

Thereafter, as shown in Fig. 3(d), the reflection surfaces (surfaces 21) are exposed by removing the resists 22.

Here, black chromium plating is suitable as black plating, but it is also possible to use oxidized and blackened copper.

According to the producing method of the example, since the reflection surface and the grid 30 are formed without etching the base material 20 and the grid 30, it is possible to reduce a difference in level between the reflection surface and the grid 30, and a side edge (machined taper) at the side surface of the grid 30 can be eliminated.

According to the producing method of the embodiment, the grid plate 10 is formed on the base material 20 which is a surface 21 having the average roughness Ra in a range from 0.008 µm to 0. 05 µm such that the black plated layer which is thinner than 3 µm is formed as the grid 30. According to this, the grid plate 10 is strong against peeling, a reflection rate at the reflection surface is 60% or more, a reflection rate at the black plated layer is 5% or less, and a high SN ratio can be obtained.

According to the producing method of the example, the grid plate 10 is formed on the base material 20 which is the surface 21 having the average roughness Ra in a range from 0.008 µm to 0. 05 µm such that the black plated layer which is thicker than 0.3 µm is formed as the grid 30. According to this, the plating property is excellent, and a reflection rate at the black plated layer becomes 30% or less.

According to the producing method of the example, the grid plate 10 is formed on the base material 20 which is the surface 21 having the average roughness Ra in a range from 0.008 µm to 0.05 µm such that the black plated layer having the thickness in the range from 1.0 µm to 2.5 µm is formed as the grid 30. According to this, a crack is not generated, a plating state become excellent, and the reflection rate at the black plated layer becomes 3% or less.

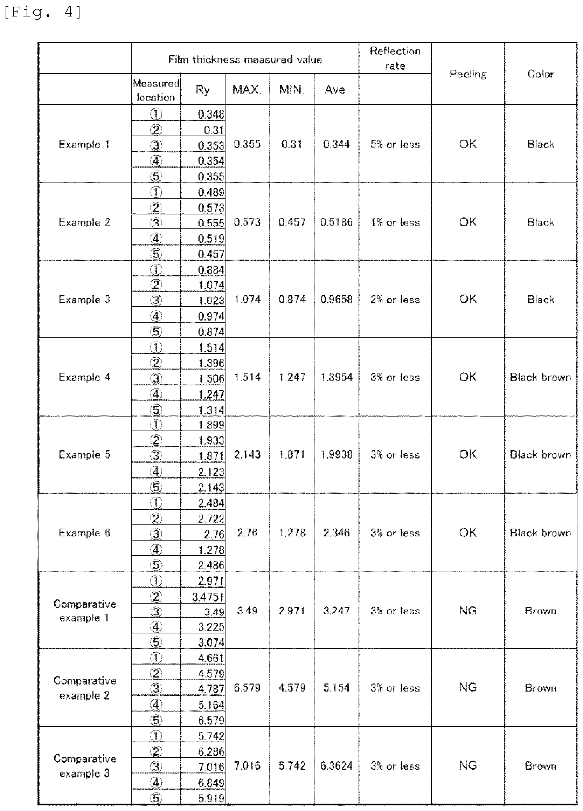

Fig. 4 shows film thickness testing results of plate layers.

In examples 1 to 6 and comparative examples 1 to 3, mirror-finished SUS 304 in which plate thickness t was 0.1 mm, average roughness Ra was 0.01 µm, ten-point average roughness Rz was 0.062 µm and a maximum height Ry was 0.074 µm was used as the base material 20. The surface roughness was measured using a non-contact type measuring instrument.

In example 1, plating processing was carried out under conditions of 15A, 3.8V, 31A/dm² and two minutes. An average film thickness was 0.344 µm. For measuring a film thickness, a surface roughness measuring instrument (SV-524 by Mitutoyo Corporation) was used, and an average value measured by 5-point measurement is defined as an average film thickness. The same is applied also in the following measurement of film thickness .

In example 2, plating processing was carried out under condition of 15A, 4.3V, 31A/dm² and four minutes. An average film thickness was 0.519 µm.

In example 3, plating processing was carried out under condition of 15A, 4.1V, 31A/dm² and five minutes. An average film thickness was 0.966 µm.

In example 4, plating processing was carried out under condition of 15A, 4.3V, 31A/dm² and six minutes. An average film thickness was 1.395 µm.

In example 5, plating processing was carried out under condition of 15A, 4.3V, 31A/dm² and ten minutes. An average film thickness was 1.994 µm.

In example 6, plating processing was carried out under condition of 15A, 3.9V, 31A/dm² and twelve minutes. An average film thickness was 2.346 µm.

In comparative example 1, plating processing was carried out under condition of 15A, 4.3V, 31A/dm² and twelve minutes. An average film thickness was 3.247 µm.

In comparative example 2, plating processing was carried out under condition of 15A, 4.0V, 31A/dm² and fourteen minutes . An average film thickness was 5.154 µm.

In comparative example 3, plating processing was carried out under condition of 15A, 4.1V, 31A/dm² and seventeen minutes . An average film thickness was 6.362 µm.

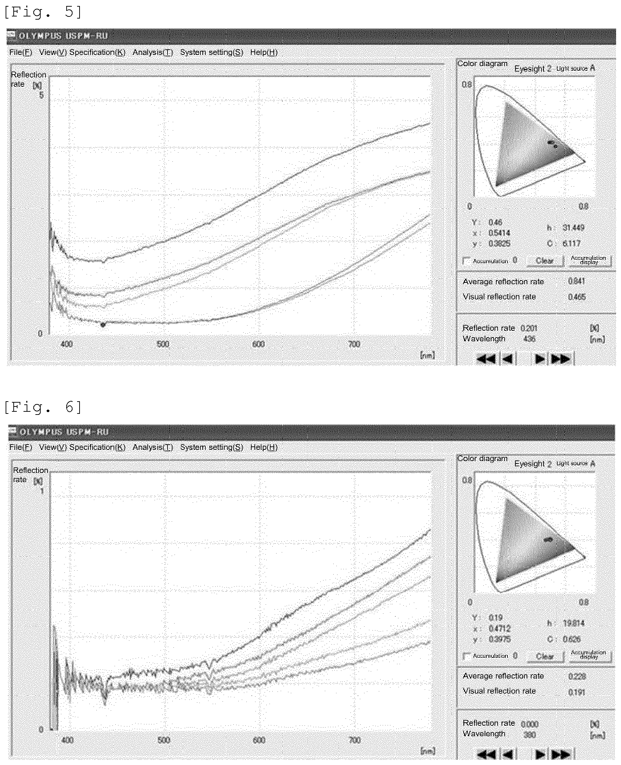

Figs. 5 to 14 are characteristic diagrams showing reflection rates which are film thickness testing results of plate layers.

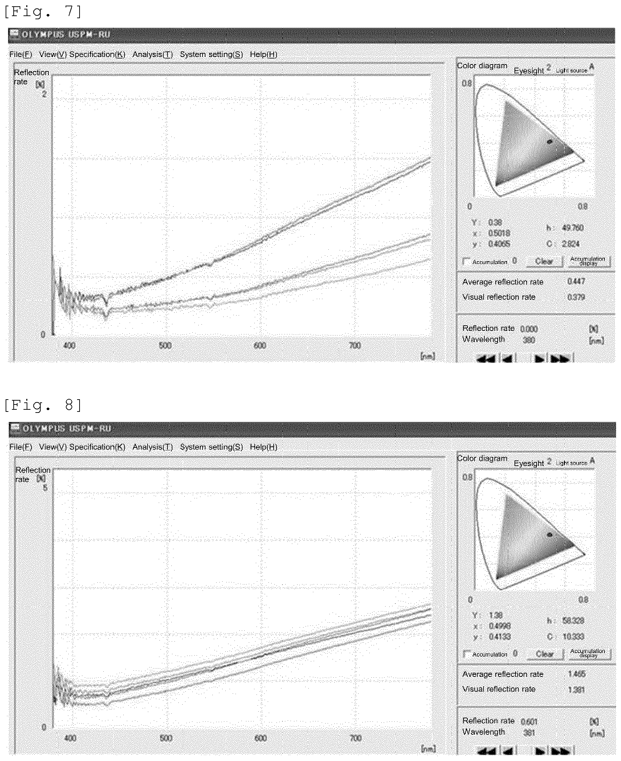

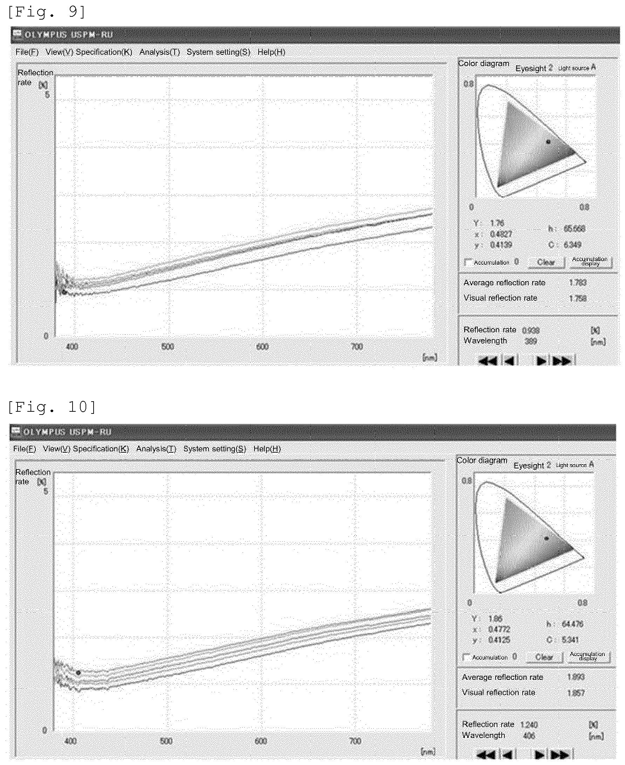

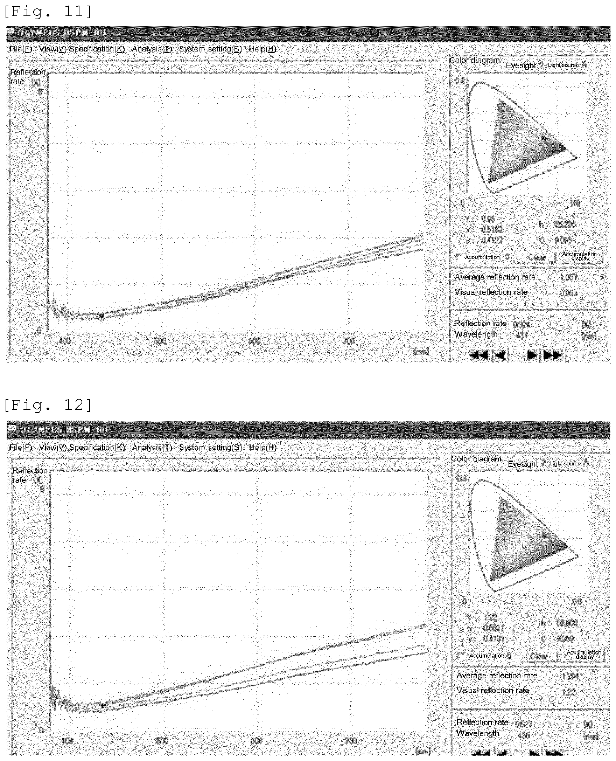

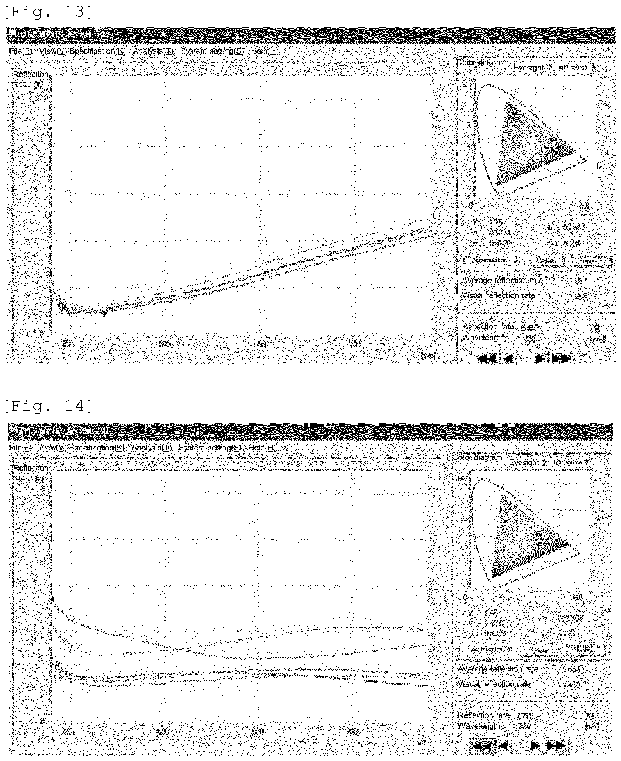

Fig. 5 is a characteristic diagram showing a reflection rate of example 1, Fig. 6 is a characteristic diagram showing a reflection rate of example 2, Fig. 7 is a characteristic diagram showing a reflection rate of example 3, Fig. 8 is a characteristic diagram showing a reflection rate of example 4, Fig. 9 is a characteristic diagram showing a reflection rate of example 5, Fig. 10 is a characteristic diagram showing a reflection rate of example 6, Fig. 11 is a characteristic diagram showing a reflection rate of comparative example 1, Fig. 12 is a characteristic diagram showing a reflection rate of comparative example 2, Fig. 13 is a characteristic diagram showing a reflection rate of comparative example 3, and Fig. 14 is a characteristic diagram showing a reflection rate of example 7.

In example 7, SUS 430 in which a plate thickness t was 0.1 mm, an average roughness Ra was 0.035 µm, ten-point average roughness Rz was 0.105 µm, and a maximum height Ry was 0.235 µm was used as the base material 20. The surface roughness was measured using a non-contact type measuring instrument.

In example 7, plating processing was carried out under condition of 160A, 4.6V, 35A/dm² and fifteen minutes. An average film thickness was 0.75 µm.

For measuring a reflection rate at the plate layer, a spectroreflectometer (engineering measurement device USPM-RU by Olympus Corporation) was used. A measured wavelength region is 380 nm to 780 nm.

In ay of examples 1 to 7 and comparative examples 1 to 3, the reflection rate is 5% or less. When chromium mask is carried out using a glass substrate as the base material 20, since the reflection rate is 5%, a reflection-reduction function is sufficient including comparative examples. The reflection rate is 1.5% or less in examples 2 and 3, the reflection-reduction function is especially excellent in the average film thickness of 0.5 µm to 1.0 µm.

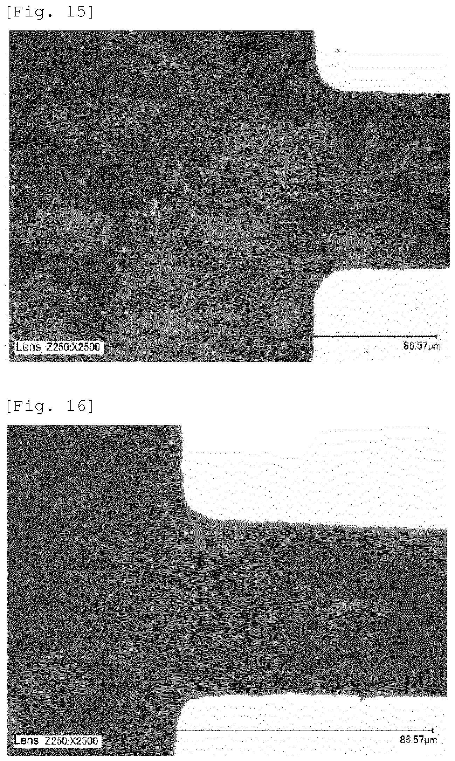

Figs. 15 to 24 are photographs showing cracks which are film thickness testing results of plate layers.

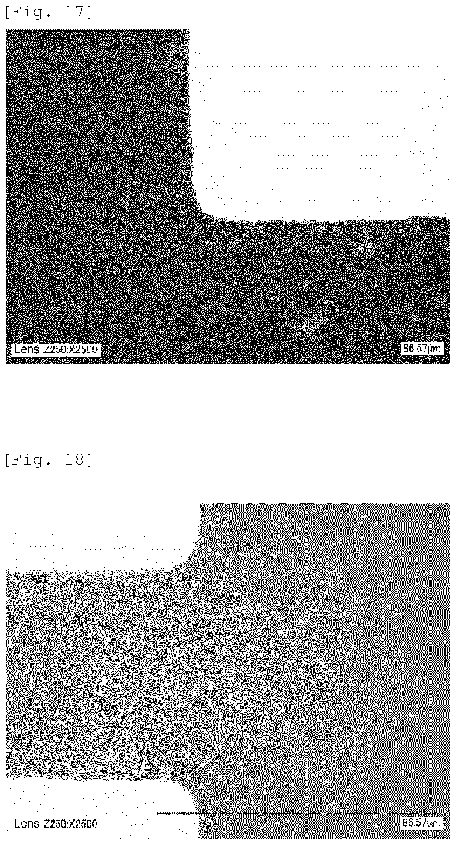

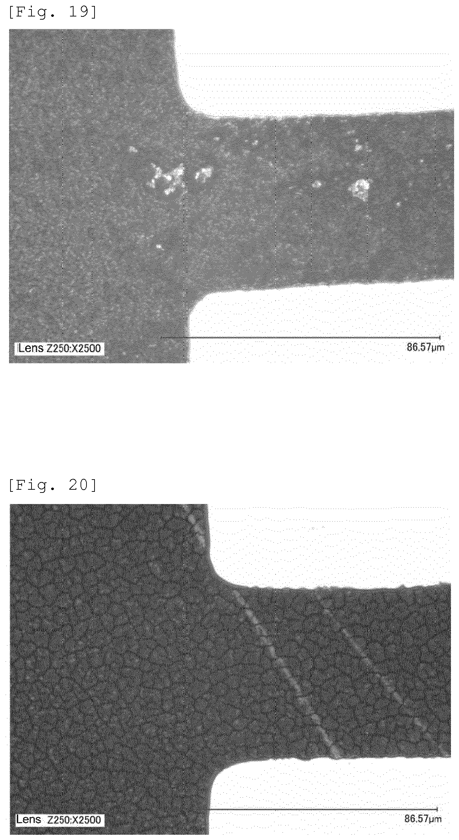

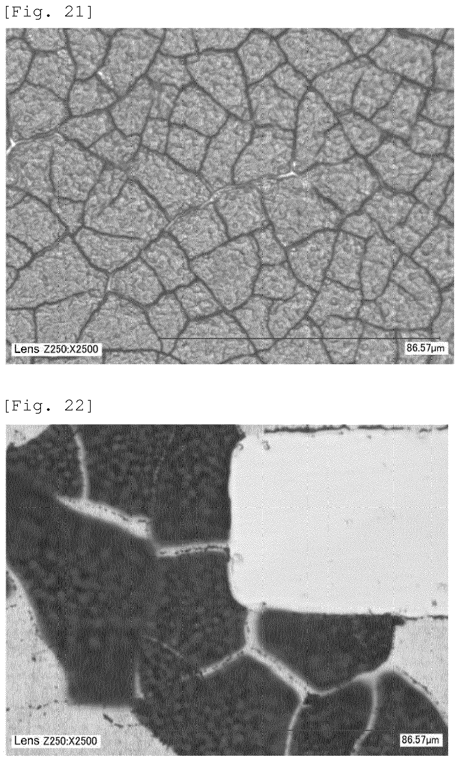

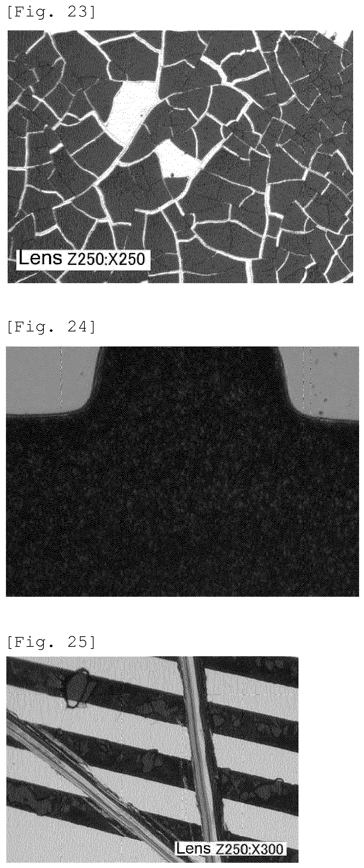

Fig. 15 is a photograph showing a crack according to example 1, Fig. 16 is a photograph showing a crack according to example 2, Fig. 17 is a photograph showing a crack according to example 3, Fig. 18 is a photograph showing a crack according to example 4, Fig. 19 is a photograph showing a crack according to example 5, Fig. 20 is a photograph showing a crack according to example 6, Fig. 21 is a photograph showing a crack according to comparative example 1, Fig. 22 is a photograph showing a crack according to comparative example 2, Fig. 23 is a photograph showing a crack according to comparative example 3, and Fig. 24 is a photograph showing a crack according to example 7.

In the tests, the plate layers were observed by a digital microscope (Keyence corporation). Figs. 15 to 22 and 24 are photographs taken by 2,500 times, and Fig. 23 is a photograph taken by 250 times.

As shown in Fig. 23, in the film thickness 6.3 µm of comparative example 3, it can be observed that a crack is clearly generated even in the photograph taken by 250 times. If the film thickness exceeds 3 µm, it can be found that a crack is generated in the photograph taken by 2,500 times as shown in comparative example 1.

Figs. 25 to 34 are photographs showing peeling results which are film thickness tests of plate layers.

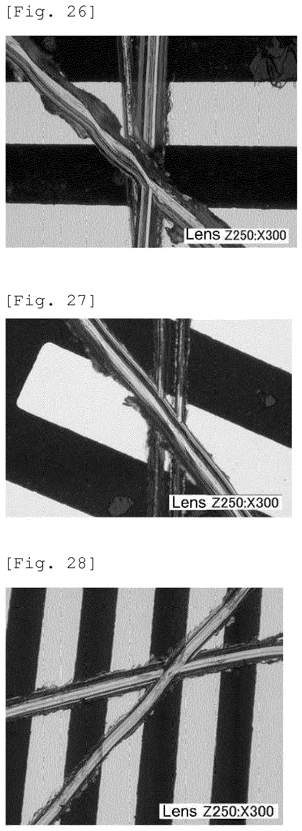

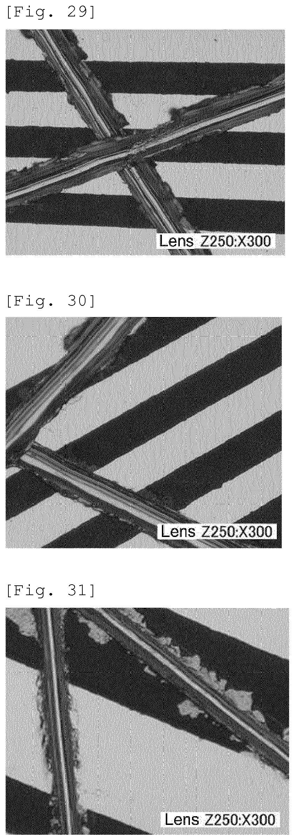

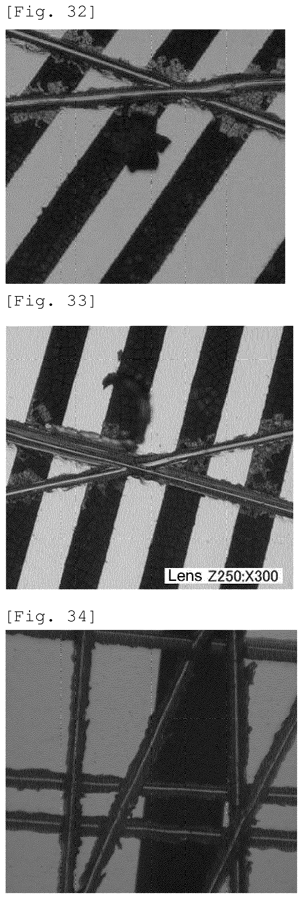

Fig. 25 is a photograph showing a peeling result according to example 1, Fig. 26 is a photograph showing a peeling result according to example 2, Fig. 27 is a photograph showing a peeling result according to example 3, Fig. 28 is a photograph showing a peeling result according to example 4, Fig. 29 is a photograph showing a peeling result according to example 5, Fig. 30 is a photograph showing a peeling result according to example 6, Fig. 31 is a photograph showing a peeling result according to comparative example 1, Fig. 32 is a photograph showing a peeling result according to comparative example 2, Fig. 33 is a photograph showing a peeling result according to comparative example 3, and Fig. 34 is a photograph showing a peeling result according to example 7.

In the test, a plate layer was injured by a scriber, an adhesive tape was pasted on the injured portion and thereafter, the tape was peeled off, and the peeled-off portion of the plate layer was observed. The peeled-off state was observed by a digital microscope (Keyence corporation). Figs. 25 to 34 are photographs taken by 300 times.

In any of examples 1 to 7, the peeled-off degree of the plate layer is extremely small, but in comparative examples 1 to 3, peeled off is generated by the adhesive tape.

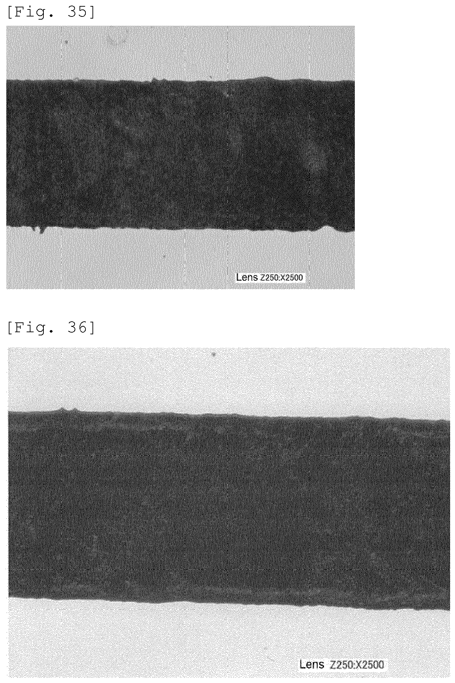

Figs. 35 to 45 are photographs showing plated surface states which are film thickness testing results of plate layers.

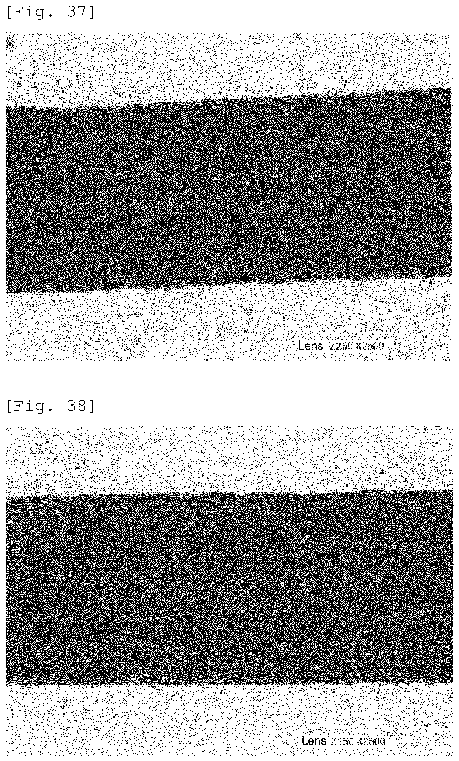

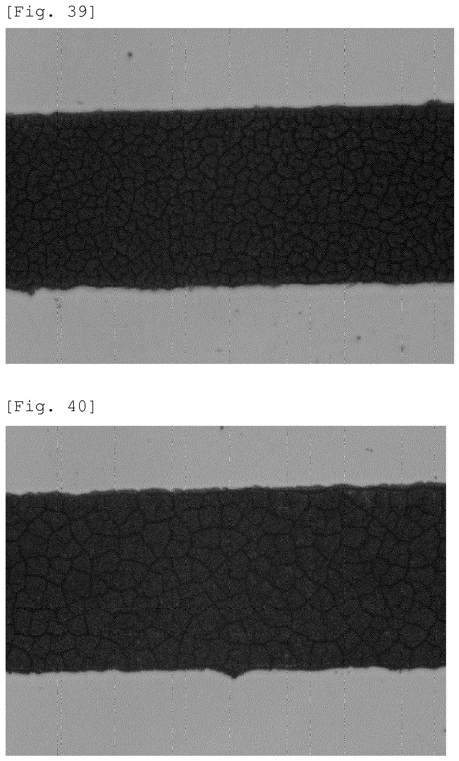

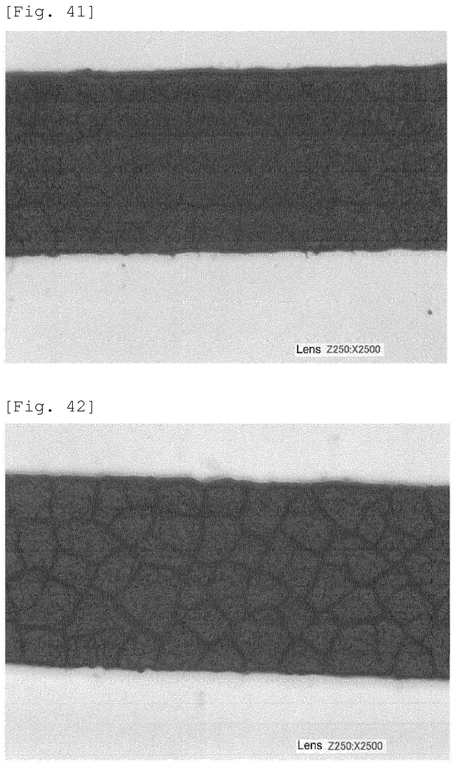

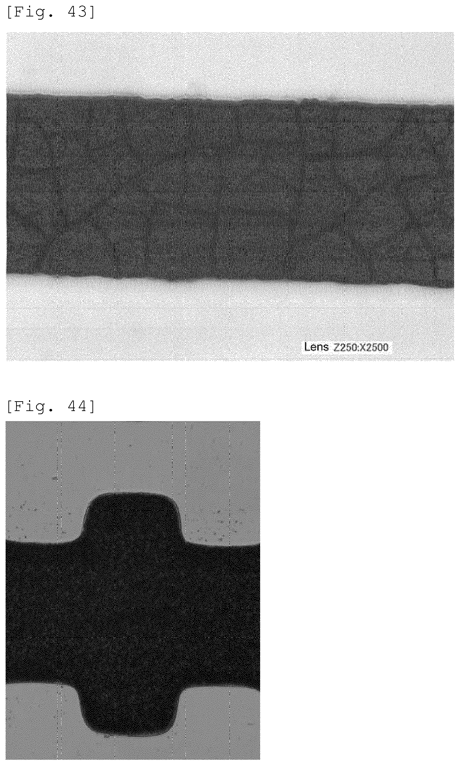

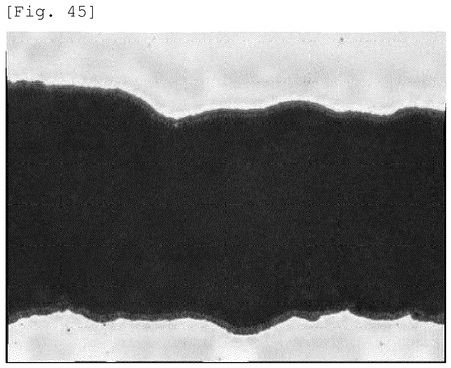

Fig. 35 is a photograph taken by 2,500 times showing a state of a plated surface according to example 1, Fig. 36 is a photograph taken by 2,500 times showing a state of a plated surface according to example 2, Fig. 37 is a photograph taken by 2,500 times showing a state of a plated surface according to example 3, Fig. 38 is a photograph taken by 2,500 times showing a state of a plated surface according to example 4, Fig. 39 is a photograph taken by 2,500 times showing a state of a plated surface according to example 5, Fig. 40 is a photograph taken by 2,500 times showing a state of a plated surface according to example 6, Fig. 41 is a photograph taken by 2,500 times showing a state of a plated surface according to comparative example 1, Fig. 42 is a photograph taken by 2,500 times showing a state of a plated surface according to comparative example 2, Fig. 43 is a photograph taken by 2,500 times showing a state of a plated surface according to comparative example 3, Fig. 44 is a photograph taken by 2,500 times showing a state of a plated surface according to example 7, and Fig. 45 is a photograph taken by 2,500 times showing a state of a plated surface according to comparative example 4.

In comparative example 4, mirror-finished SUS 304 in which plate thickness t was 0.1 mm, average roughness Ra was 0.01 µm, ten-point average roughness Rz was 0.062 µm and a maximum height Ry was 0.074 µm was used as the base material 20. The base material 20 was etched in a depth range from 10 µm to 15 µm by an etching machine, the base material 20 was immersed in 10% hydrochloric acid for 30 seconds, and its surface 21 was subjected to roughness processing. Its average roughness Ra became 0.2 µm by the roughness processing.

Comparative example 4 was subjected to plating processing under conditions of 25A, 5V and five minutes. A film thickness of the plating was 1.5 µm.

In each of the tests, the plate layer was observed by a digital microscope (VHX-2000 by Keyence corporation).

Although it is difficult to judge colors of the plate layers by means of the photographs, the plate layers were black in examples 1 to 3 and comparative example 4, the plate layer were black brown in examples 4 to 7, and plate layers were brown in comparative examples 1 to 3.

Plating states of comparative examples 1 to 3, interiors were partially sticky, and it was observed that the plate layers were peeled off. Especially in comparative examples 2 and 3, plate layers at slit portions were peeled off. In comparative example 1, the plating state at the slit portion was excellent.

In examples 1 to 7, it was observed that plate layers were not peeled off unlike comparative examples 1 to 3. However, it was observed that plating was not partially sufficient in examples 1 and 2.

Although plating property of comparative example 4 was excellent, irregularity was generated in the slit portion.

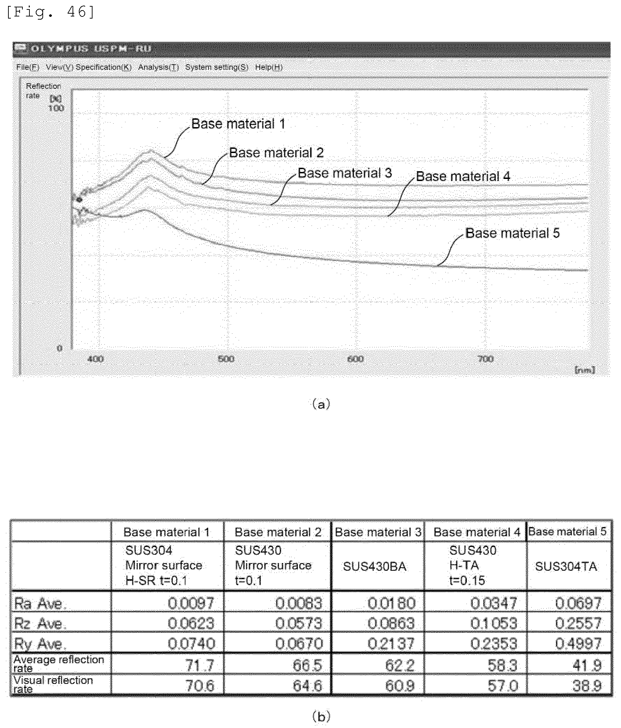

Figs. 46 are diagrams showing surface roughness and a reflection rate of a base material.

As shown as "base material 5" in Fig. 46(b), if the average roughness Ra of the surface 21 of stainless steel is 0.07 µm, an average reflection rate at the reflection surface is lowered to 42%.

When the average roughness Ra of the surface 21 of stainless steel is in a rage from 0.008 µm to 0.05 µm, it is possible to obtain an average reflection rate of 60% or more.

As described above, according to examples, the reflection rate at the black plated layer can be made 3% or less, and reflection rate at the reflection surface can be made 60% or more, and a high SN ratio can be obtained by forming the black plated layer without etching.

### [INDUSTRIAL APPLICABILITY]

The optical encoder grid plate of the present invention can be used for a rotary encoder and a linear encoder.

### [EXPLANATION OF SYMBOLS]

- 1: light-emission source
- 2: light receiving element
- 10: optical encoder grid plate
- 20: base material
- 21: surface
- 22: resist
- 30: grid

## Claims

1. An optical encoder grid plate (10), suitable for irradiation by visible light or near-infrared light,
wherein the optical encoder grid plate (10) is suitable for use in an optical encoder which detects a displacement amount or a displacement direction by receiving reflection light reflected by a reflection surface (21),
wherein the optical encoder grid plate (10) includes a base material (20) whose one of surfaces is the reflection surface (21), and at least one grid, wherein the at least one grid consists of spaced bars (30) arranged at a predetermined grid width on the reflection surface (21),
wherein metal is used as the base material (20), and the spaced bars (30) of the grid plate (10) are formed on the reflection surface (21) by a black plated layer, of which a thickness is thinner than 3 µm,
wherein an average roughness Ra of the reflection surface (21) of the metal is in a range from 0.008 µm to 0.05 µm.

2. The optical encoder grid plate (10) according to claim 1,
wherein the thickness of the black plated layer (30) is thicker than 0.3 µm.

3. The optical encoder grid plate (10) according to claim 2,
wherein the thickness of the black plated layer (30) is in a range from 1.0 µm to 2.5 µm.

4. The optical encoder grid plate (10) according to claim 1,
wherein the grid width is in a range from 10 µm to 100 µm.

5. The optical encoder grid plate (10) according to any one of claims 1 to 4, wherein stainless steel is used as the metal.

6. A method for producing an optical encoder grid plate (10) suitable for use in an optical encoder comprising the following steps:
providing a base material (20) with one of surfaces is a reflection surface (21),wherein metal is used as the base material (20), and
wherein an average roughness of the reflection surface (21) is in a range from 0.008 µm to 0.05 µm,
forming resists (22) on the reflection surface (21) with a grid width as a space between the resists (22),
forming the resists (22) with the grid width in a range from 10 µm to 100 µm,
wherein the resists (22) of the grid plate (10) are arranged at the predetermined grid width on the surface, and
forming the grid by a black plated layer of which a thickness is thinner than 3 µm in the space between the resists (22) on the reflection surface (21) of the base material (20), and
removing the resists to expose the reflection surface (21) .

## Patentansprüche

1. Gitterplatte (10) eines optischen Codierers, die zur Bestrahlung mit sichtbarem Licht oder nahem Infrarotlicht geeignet ist, wobei die Gitterplatte (10) eines optischen Codierers zur Verwendung in einem optischen Codierer geeignet ist, der einen Verlagerungsumfang oder eine Verlagerungsrichtung durch aufnehmendes Reflexionslicht erfasst, das von einer Reflexionsfläche (21) reflektiert wird,
wobei die optische Codierer-Gitterplatte (10) ein Basismaterial (20), dessen eine Oberfläche die Reflexionsfläche (21) ist, und mindestens ein Gitter aufweist, wobei das mindestens eine Gitter aus beabstandeten Stäben (30) besteht, die mit einer vorgegebenen Gitterbreite auf der Reflexionsfläche (21) angeordnet sind,
wobei Metall als Basismaterial (20) verwendet wird und die beabstandeten Stäbe (30) der Gitterplatte (10) auf der Reflexionsfläche (21) durch eine schwarz überzogene Schicht ausgebildet sind, deren Stärke dünner als 3 µm ist,
wobei eine durchschnittliche Rauheit Ra der Reflexionsfläche (21) des Metalls in einem Bereich von 0,008 µm bis 0,05 µm liegt.

2. Optische Codierer-Gitterplatte (10) nach Anspruch 1,
wobei die Stärke der schwarz überzogenen Schicht (30) dicker als 0,3 µm ist.

3. Optische Codierer-Gitterplatte (10) nach Anspruch 2,
wobei die Stärke der schwarz überzogenen Schicht (30) in einem Bereich von 1,0 µm bis 2,5 µm liegt.

4. Optische Codierer-Gitterplatte (10) nach Anspruch 2,
wobei die Gitterbreite in einem Bereich von 10 µm bis 100 µm liegt.

5. Optische Codierer-Gitterplatte (10) nach einem der Ansprüche 1 bis 4, wobei Edelstahl als Metall eingesetzt wird.

6. Verfahren zur Herstellung einer optischen Codierer-Gitterplatte (10), die zur Verwendung in einem optischen Codierer geeignet ist, mit den folgenden Schritten:
Bereitstellen eines Basismaterials (20), wobei eine der Oberflächen eine Reflexionsfläche (21) ist, wobei Metall als Basismaterial (20) eingesetzt wird, und
wobei eine durchschnittliche Rauheit der Reflexionsfläche (21) in einem Bereich von 0,008 µm bis 0,05 µm liegt,
Ausbilden von Abdeckmitteln (22) auf der Reflexionsfläche (21) mit einer Gitterbreite als Zwischenraum zwischen den Abdeckmitteln (22),
Ausbilden der Abdeckmittel (22) mit der Gitterbreite in einem Bereich von 10 µm bis 100 µm,
wobei die Abdeckmittel (22) der Gitterplatte (10) mit der vorgegebenen Gitterbreite auf der Oberfläche angeordnet sind, und
Ausbilden des Gitters durch eine schwarz überzogene Schicht, deren Stärke in dem Zwischenraum zwischen den Abdeckmitteln (22) auf der Reflexionsfläche (21) des Basismaterials (20) dünner als 3 µm ist, und
Entfernen der Abdeckmittel, um die Reflexionsfläche (21) freizulegen.

## Revendications

1. Plaque de grille de codeur optique (10), adaptée pour une irradiation par une lumière visible ou une lumière dans l'infrarouge proche, dans laquelle la plaque de grille de codeur optique (10) est adaptée pour une utilisation dans un codeur optique qui détecte une quantité de déplacement ou une direction de déplacement en recevant une lumière de réflexion réfléchie par une surface de réflexion (21),
dans laquelle la plaque de grille de codeur optique (10) inclut un matériau de base (20) dont l'une des surfaces est la surface de réflexion (21), et au moins une grille, dans laquelle la au moins une grille est constituée de barres espacées (30) agencées à une largeur de grille prédéterminée sur la surface de réflexion (21),
dans laquelle un métal est utilisé comme le matériau de base (20), et les barres espacées (30) de la plaque de grille (10) sont formées sur la surface de réflexion (21) par une couche plaquée noire, dont une épaisseur est inférieure à 3 µm,
dans laquelle une rugosité moyenne Ra de la surface de réflexion (21) du métal est dans une plage de 0,008 µm à 0,05 µm.

2. Plaque de grille de codeur optique (10) selon la revendication 1,
dans laquelle l'épaisseur de la couche plaquée noire (30) est supérieure à 0,3 µm.

3. Plaque de grille de codeur optique (10) selon la revendication 2,
dans laquelle l'épaisseur de la couche plaquée noire (30) est dans une plage de 1,0 µm à 2,5 µm.

4. Plaque de grille de codeur optique (10) selon la revendication 1,
dans laquelle la largeur de grille est dans une plage de 10 µm à 100 µm.

5. Plaque de grille de codeur optique (10) selon l'une quelconque des revendications 1 à 4, dans laquelle un acier inoxydable est utilisé comme métal.

6. Procédé pour produire une plaque de grille de codeur optique (10) adaptée pour une utilisation dans un codeur optique, comportant les étapes suivantes consistant à :
fournir un matériau de base (20) dont l'une des surfaces est une surface de réflexion (21), dans lequel un métal est utilisé comme le matériau de base (20), et
dans lequel une rugosité moyenne de la surface de réflexion (21) est dans une plage de 0,008 µm à 0,05 µm,
former des réserves (22) sur la surface de réflexion (21) avec une largeur de grille sous la forme d'un espace entre les réserves (22),
former les réserves (22) avec la largeur de grille dans une plage de 10 µm à 100 µm,
dans lequel les réserves (22) de la plaque de grille (10) sont agencées à la largeur de grille prédéterminée sur la surface, et
former la grille par une couche plaquée noire dont une épaisseur est inférieure à 3 µm dans l'espace entre les réserves (22) sur la surface de réflexion (21) du matériau de base (20), et
retirer les réserves pour exposer la surface de réflexion (21) .
